**Europäisches Patentamt**

**European Patent Office**

**Office européen des brevets**

(19)

(11) Numéro de publication: **0 033 693**
**B1**

(12)

# FASCICULE DE BREVET EUROPEEN

(45) Date de publication du fascicule du brevet:
**25.04.84**

(51) Int. Cl.³: **H 02 K 7/118,** H 02 K 19/04,
G 04 C 15/00

(21) Numéro de dépôt: **81400137.6**

(22) Date de dépôt: **29.01.81**

(54) **Dispositif anti-retour pour moteur synchrone autodémarrant.**

(30) Priorité: **04.02.80 FR 8002410**

(43) Date de publication de la demande:
**12.08.81 Bulletin 81/32**

(45) Mention de la délivrance du brevet:
**25.04.84 Bulletin 84/17**

(84) Etats contractants désignés:
**BE CH DE GB IT LI NL SE**

(56) Documents cités:
**DE - A - 2 362 611**
**FR - A - 1 257 684**
**FR - A - 2 115 597**
**FR - A - 2 184 170**
**FR - A - 2 336 823**
**FR - E - 90 015**
**GB - A - 800 743**
**US - A - 2 972 687**
**US - A - 3 111 596**
**US - A - 3 200 915**
**US - A - 3 525 888**
**US - A - 3 748 508**
**US - A - 3 860 841**

(73) Titulaire: **CROUZET, 128, Avenue de la République,**
**F-75011 Paris (FR)**

(72) Inventeur: **Vialy, Roger, Impasse Desbrun,**
**F-26120 Chabeuil (FR)**

(74) Mandataire: **Bloch, Robert et al, Cabinet ROBERT**
**BLOCH 39 avenue de Friedland, F-75008 Paris (FR)**

BUNDESDRUCKEREI BERLIN

Dispositif anti-retour pour moteur synchrone autodémarrant

La présente invention concerne un dispositif anti-retour pour moteur synchrone autodémarrant, comprenant un pignon avec une denture anti-retour, solidaire du rotor du moteur, une came pourvue d'une lumière à travers laquelle s'étend l'arbre du rotor, montée pivotante sous l'action de la rotation de l'arbre du rotor, entre deux positions, et pourvue d'un bec agencé pour coopérer avec la denture antiretour du pignon dans une des deux positions de la came.

On connaît déjà un tel dispositif, notamment par le document FR-A-2 115 597 au nom de la demanderesse. Ce dispositif comporte donc une came moulée en matière plastique comportant un bec susceptible de coopérer à la manière d'un cliquet evac une denture, du type dent le loup, solidaire du rotor pour lui imposer un sens de rotation. La position de cette came varie suivant le sens de rotation du rotor grâce à un effet de friction obtenu par le frottement de la face interne de la lumière, ménagée dans ladite came, sur l'axe métallique du rotor et sous l'action d'un ressort de pression en forme d'anneau métallique.

Cette disposition présente toutefois l'inconvénient de réaliser une friction instable dont la valeur est difficilement maîtrisable du fait des petites dimensions de l'anneau métallique dont l'effort n'est pas constant.

La présente invention vise donc à pallier cet inconvénient.

A cet effet, l'invention concerne un dispositif du type mentionné ci-dessus, caractérisé par le fait qu'il est prévu un deuxième pignon monté libre sur l'arbre du rotor et s'étendant dans la lumière de la came, le pignon étant agencé pour être entraîné en rotation par le rotor et entraîner la came en pivotement.

Grâce à l'invention, le deuxième pignon étant entraîné par le rotor et entraînant lui-même la came, l'entraînement de celle-ci peut être réalisé par des surfaces plus importantes et, par conséquent, être mieux contrôlé.

Dans une forme de réalisation préférée du dispositif de l'invention, le deuxième pignon comporte une denture agencée pour entraîner un secteur denté interne prévu sur la came concentriquement à son axe de pivotement.

En outre, il est avantageux que le support du rotor comporte une surface conique agencée pour entraîner par friction une surface conique correspondante ménagée sur le deuxième pignon.

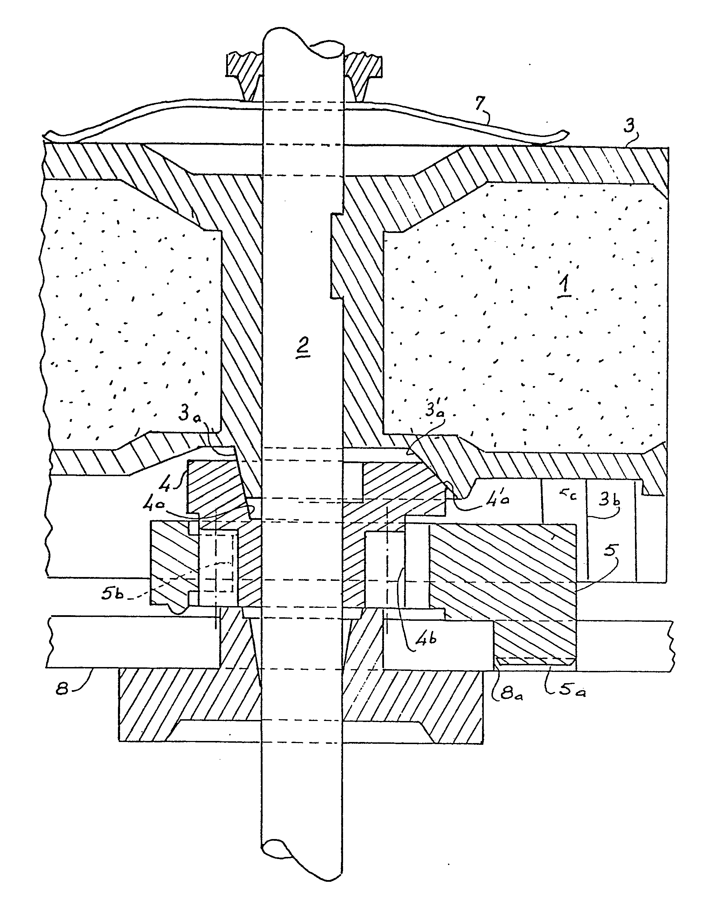

L'invention sera mieux comprise à l'aide de la description suivante de deux formes de réalisation préférée du dispositif de l'invention, en référence à la figure unique qui représente une vue en coupe partielle, avec, sur la partie gauche, un pignon à entraînement interne, et, sur la partie droite, un pignon à entraînement externe.

La figure représente une partie d'un moteur synchrone autodémarrant, comprenant une partie statorique à deux flasques et une bobine, seul l'un 8 des deux flasques étant représenté, et une partie rotorique. Le rotor comporte une ferrite 1 moulée dans un support 3, par exemple en matière plastique, de préférence chargée en billes de verre, solidaire en rotation, de façon connue en soi, de l'arbre d'entraînement 2 du moteur. Le support 3 comporte, à proximité de l'un de ses deux orifices de passage de l'arbre 2, une surface tronconique de même axe que l'arbre 2 et le support 3 du moteur. Sur la partie gauche de la figure, cette surface tronconique 3a est ménagée à proximité de l'arbre 2, avec un angle au sommet du tronc de cône relativement aigu, de l'ordre de 40°, et, sur la partie droite de la figure, cette surface tronconique 3'a est éloignée de l'arbre 2, avec un angle au sommet plus obtus, de l'ordre de 90°.

En outre, le support 3 comporte, du côté du même orifice de passage de l'arbre 2, un pignon à denture anti-retour 3b, solidaire de ce support. En réalité, le support 3, la surface tronconique 3a, 3'a et la denture anti-retour 3b sont obtenus lors de la même opération de moulage.

Le moteur comporte un deuxième pignon 4, monté tout d'abord libre en rotation sur l'arbre 2, près de l'orifice de passage du support 3 en question. Ce pignon 4 comporte une surface tronconique correspondant à celle du support 3 et agencée pour coopérer par friction avec celle-ci et être ainsi entraîné en rotation dans le même sens que le rotor du moteur. Sur la partie gauche de la figure, il s'agit donc d'une surface 4a ménagée à la périphérie intérieure, et, sur la partie droite, d'une surface 4'a ménagée à la périphérie extérieure.

Le moteur comporte encore une came anti-retour 5, pourvue d'une lumière 5b, à travers laquelle s'étend l'arbre 2 et dans laquelle le pignon 4 fait saillie, et d'un téton de pivotement 5a, monté libre en rotation dans un orifice 8a ménagé dans le flasque 8 du stator du moteur.

La partie du pignon 4 en saillie dans la lumière de la came 5 comporte une denture 4b agencée pour coopérer avec un secteur denté, ménagée à la périphérie interne de la lumière 5b de la came 5, concentriquement à son axe de pivotement 5a, pour que, lorsque le pignon 4 est entraîné en rotation par le rotor, il entraîne également la came 5 en pivotement sur son téton 5a, entre deux positions déterminées par l'étendue du secteur denté 5b et, éventuellement, les deux fonds opposés de la lumière de la came.

La came 5 est également pourvue d'un bec 5c, formé par la partie de la came disposée au droit du téton 5a, agencé pour coopérer avec la denture anti-retour 3b du support 3 et empêcher ainsi celui-ci de tourner dans le mauvais sens.

Enfin, une rondelle élastique 7, exerçant un effort de pression appuye sur le support 3 du rotor, du côté de son autre orifice de passage de l'arbre 2, pour mieux entraîner ou assurer le support en coopération par friction avec le pignon 4, par leurs surfaces tronconiques respectives.

Le fonctionnement du dispositif est le suivant. Suivant le sens de démarrage du rotor 1, 2, 3, lors de la mise sous tension, la came 5 est entraînée en pivotement sur son téton 5a par le pignon 4 dans un sens ou dans l'autre, par l'intermédiaire des surfaces tronconiques 3a, 4a ou 3'a, 4'a en friction, l'une sur l'autre, le bec 5c de la came 5 venant coopérer ou non avec la denture anti-retour 3b du rotor. Lorsque celui-ci se met à tourner dans le mauvais sens, la came vient bloquer cette denture, et empêcher le rotor de tourner dans ce mauvais sens.

L'entraînement du pignon 4 par le rotor 1, 2, 3 est réalisé par les surfaces tronconiques décrites précédemment et dont l'étendue confère à cet entraînement une excellente fiabilité.

## Revendications

1. Dispositif anti-retour pour moteur synchrone autodémarrant, comprenant un pignon avec une denture anti-retour (3b), solidaire du rotor (1) du moteur, une came (5) pourvue d'une lumière (5b) à travers laquelle s'étend l'arbre (2) du rotor (1), montée pivotante sous l'action de la rotation de l'arbre (2) du rotor (1), entre deux positions, et pourvue d'un bec (5c) agencé pour coopérer avec la denture anti-retour (3b) du pignon dans une des deux positions de la came (5), caractérisé par le fait qu'il est prévu un deuxième pignon (4) monté libre sur l'arbre (2) du rotor (1) et s'étendant dans la lumière (5b) de la came (5), le pignon (4) étant agencé pour être entraîné en rotation par le rotor (1) et entraîner la came (5) en pivotement.

2. Dispositif selon la revendication 1, dans lequel le dit deuxième pignon (4) comporte une denture (4b) agencée pour entraîner un secteur denté interne prévu sur la came (5) concentriquement à son axe de pivotement.

3. Dispositif selon l'une des revendications 1 et 2, dans lequel le support (3) du rotor comporte une surface conique (4'a) agencée pour entraîner par friction une surface conique (3'a) correspondante ménagée sur le dit deuxième pignon (4).

4. Dispositif selon la revendication 3, dans lequel la surface conique (3'a) du dit deuxième pignon (4) est ménagée à une périphérie extérieure de celui-ci.

5. Dispositif selon la revendication 3, dans lequel la surface conique (3a) du dit deuxième pignon (4) est ménagée à une périphérie intérieure de celui-ci.

6. Dispositif selon l'une des revendications 3 à 5, dans lequel la friction entre le support (3) du rotor et le dit deuxième pignon (4) est assurée par une rondelle élastique (7).

## Patentansprüche

1. Gegenlaufsperre für einen selbstanlaufenden Synchronmotor, enthaltend ein mit dem Rotor (1) des Motors drehfest verbundenes Zahnritzel mit einer Gegenlaufsperr-Verzahnung (3b) und eine Nockenscheibe (5), die mit einem Durchlaß (5b) versehen ist, durch die sich die Welle (2) des Rotors (1) erstreckt, und die unter dem Einfluß der Rotation der Welle (2) des Rotors (1) zwischen zwei Stellungen schwenkbar ist, und die einen Ansatz (5c) aufweist, der in der Lage ist, in einer der beiden Stellungen der Nockenscheibe (5) mit der Gegenlaufsperr-Verzahnung (3b) des Zahnritzels zusammenzuwirken, dadurch gekennzeichnet, daß sie ein zweites Zahnritzel (4) enthält, das frei auf der Welle (2) des Rotors (1) gelagert ist und sich in den Durchlaß (5b) der Nockenscheibe (5) erstreckt, und daß das Zahnritzel (4) in der Lage ist, von dem Rotor (1) zu einer Rotationsbewegung angetrieben zu werden und die Nockenscheibe (5) zu einer Schwenkbewegung anzutreiben.

2. Gegenlaufsperre nach Anspruch 1, dadurch gekennzeichnet, daß das zweite Zahnritzel (4) eine Verzahnung (4b) aufweist, die in der Lage ist, einen inneren Zahnsektor anzutreiben, der an der Nockenscheibe 5 konzentrisch zu deren Schwenkachse angebracht ist.

3. Gegenlaufsperre nach einem der Ansprüche 1 und 2, dadurch gekennzeichnet, daß der Sockel (3) des Rotors eine Konusfläche (4'a) aufweist, die in der Lage ist, durch Reibungsschluß eine zugeordnete Konusfläche (3'a) anzutreiben, die an dem zweiten Zahnritzel (4) angebracht ist.

4. Gegenlaufsperre nach Anspruch 3, dadurch gekennzeichnet, daß die Konusfläche (3'a) des zweiten Zahnritzels (4) an einer äußeren Umfangsfläche desselben angebracht ist.

5. Gegenlaufsperre nach Anspruch 3, dadurch gekennzeichnet, daß die Konusfläche (3a) des zweiten Zahnritzels (4) an einer inneren Umfangsfläche desselben angeordnet ist.

6. Gegenlaufsperre nach einem der Ansprüche 3 bis 5, dadurch gekennzeichnet, daß der Reibungsschluß zwischen dem Sockel (3) des Rotors und den zweiten Zahnritzel (4) durch eine elastische Scheibe (7) gewährleistet ist.

## Claims

1. Non-return device for self-starting synchronous motor, comprising a pinion with a non-return toothing (3b), fast with the rotor (1) of the motor, a cam (5) provided with a slot (5b) through which extends the shaft (2) of the rotor (1), mounted to pivot under the action of the rotation of the shaft (2) of the rotor (1), between two positions, and provided with a nose element (5c) adapted to cooperate with the non-return toothing (3b) of the pinion in one of the two positions of the cam (5), characterized in that there is provided a second pinion (4) mounted freely on the shaft (2) of the rotor (1) and extending in the slot (5b) of the cam (5), the pinion (4) being adapted to be driven in rotation by the rotor (1) and to drive the cam (5) in a pivoting movement.

2. Device according to Claim 1, wherein the said second pinion (4) comprises a toothing (4b) adapted to drive an inner toothed sector provided on the cam (5) concentrically to its pivot axis.

3. Device according to one of Claims 1 and 2, wherein the support (3) of the rotor comprises a conical surface (4'a) adapted to drive by friction a corresponding conical surface (3'a) provided on said second pinion (4).

4. Device according to Claim 3, wherein the conical surface (3'a) of said second pinion (4) is provided on an outer periphery of the latter.

5. Device according to Claim 3, wherein the conical surface (3a) of said second pinion (4) is provided on an inner periphery of the latter.

6. Device according to one of Claims 3 to 5, wherein the friction between the support (3) of the rotor and said second pinion (4) is ensured by an elastic washer (7).